# EUROPÄISCHE PATENTANMELDUNG

(11) **EP 1 342 684 A2**
(43) Veröffentlichungstag der Anmeldung: **10.09.2003**
(21) Anmeldenummer: 03002851.8
(22) Anmeldetag: 08.02.2003
(51) Int. Cl.: B65H 23/02

(54) **Klebeband für den fliegenden Rollenwechsel**

(30) Priorität: 07.03.2002 DE 10210192
(71) Anmelder: tesa AG, 20253 Hamburg (DE)
(72) Erfinder: Nootbaar, Jens, 22527 Hamburg (DE)

(57) **Zusammenfassung**

Klebeband (1) für den fliegenden Rollenwechsel von auf Rollen (12) aufgewickeltem Flachbahnmaterial, mit klebender Vorderseite und nichtklebender Rückseite sowie zwei Längskanten mit einem Hauptträger (2), der einseitig an der Vorderseite mit einer Selbstklebemasse (3) beschichtet ist, wobei nur ein Teil der nichtklebenden Rückseite mit zumindest einem selbstklebenden System (6) ausgerüstet ist, dadurch gekennzeichnet, der Hauptträger zumindest im Bereich des selbstklebenden Systems (6) aus spaltbarem Material besteht.

## Beschreibung

Die Erfindung betrifft ein Klebeband für den fliegenden Rollenwechsel von auf Rollen aufgewickeltem Flachbahnmaterial, mit klebender Vorderseite und nichtklebender Rückseite sowie zwei Längskanten, mit einem Hauptträger, der einseitig an der Vorderseite mit einer Selbstklebemasse beschichtet ist, wobei ein Teil der nichtklebenden Rückseite mit zumindest einem selbstklebenden System ausgerüstet ist, sowie Spliceverfahren für den fliegenden Rollenwechsel von auf Rollen aufgewickelten Flachbahnmaterial, für welches ein derartiges Klebeband geeignet ist.

Der fliegende Rollenwechsel ist in Papierfabriken oder dergleichen ein gängiges Verfahren, um eine alte, fast abgespulte Papierrolle durch eine neue zu ersetzen, ohne die schnell laufenden Maschinen anhalten zu müssen. Dabei werden doppelseitige klebende Selbstklebebänder, sogenannte Fixe, eingesetzt, die einerseits hochklebrig und -tackig sind, andererseits aufgrund ihrer wasserlöslichen Selbstklebemassen und Papierträger beim Wiedereinsatz der Papierabfälle in der Papiermaschine nicht stören. Diese Fixe werden in kunstvoller Weise in Zackenform am Bahnanfang verklebt, eine Prozedur, die erfahrene Fachleute verlangt, wobei für den gesamten Arbeitsvorgang aufgrund der schnell laufenden Maschinen nur etwa 4 bis 13 Minuten Zeit verbleibt.

Obgleich diese Technologie bewährt und eingespielt ist, hat sie doch einige Nachteile. So ist Fachpersonal nötig, Hektik ist vorgegeben, und die Verklebungen sind auch relativ dick, da jeweils zwei Papierlagen und das dazwischenklebende Fix das Resultat sind: Ein in der Papierindustrie unerwünschtes Resultat, da es aufgrund der hohen Dicke zu Abrissen, u.a. am Streichmessern in Papierstreichmaschinen kommen kann.

Für diese Spitzenklebung beim fliegenden Rollenwechsel gibt es diverse Produkte im Handel, sogenannte Fixe, die neben einem Papierträger eine wasserlösliche Selbstklebemasse beiderseits beschichtet aufweisen. Solche Klebebänder sind u.a. unter der Bezeichnung tesafix (tesa AG) im Handel.

Darüber hinaus gehören zum Stand der Technik Klebebänder, die mit spaltfähigen Papierträgern ausgerüstet sind und beispielsweise in den Schriften DE 196 28 317 A1 und DE 199 02 179.1-43 beschrieben werden. Auch diese Klebebänder sind unter der Bezeichnung EasySplice PrintLine und FastLine im Handel erhältlich.

Diese EasySplice-Klebebänder sind zwar schon bezüglich der Dicke der Verklebungsstelle dünner als die konventionellen Klebebänder für die Spitzenverklebung, aber im weiteren wird ein Klebebandtyp beschrieben, der eine weitere wesentliche Reduktion der Splicedicke erlaubt und somit die Wahrscheinlichkeit für Abrisse deutlich reduziert.

Die Dicke handelsüblicher Klebebänder für das Endlosverkleben liegt im Bereich des Spaltstreifens bei 170 µm im gespaltenen Zustand. Damit ergibt sich am Beispiel eines 39 g/m² Streichrohpapiers (30 µm) eine Splicedicke an der vorderen Kante in Produktionsrichtung von 200 µm. Dieses ist die wesentliche Dicke, da sie beim Durchlauf in Verarbeitungsmaschinen den ersten Kontakt mit Streichaggregaten, Druckwalzen oder ähnlichem hat, und hier durch Form und Dicke des Splices besondere Gefahr für einen Abriß besteht.

Weiter gehört zum Stand der Technik ein Klebeband, bei dem der Papierträger beidseitig mit einer wasserlöslichen Selbstklebemasse beschichtet ist und bei dem der Papierträger aus einem spleißfreudigen Papier besteht. Dieses Klebeband ist in der DE 196 32 689 A1 beschrieben. Es wird ein Papierträger offenbart, der in voller Breite spaltet. Bei dieser Funktionsweise reduziert sich die Höchstzugkraft des gespaltenen Papiers und damit die maximal mögliche zu übertragene Bahnspannung dramatisch. Bei mittig gespaltenen Papieren reduziert sie sich um mindestens 50 %. Für den Fall, daß die Spaltebene nicht mittig ist, kann die Höchstzugkraft auch deutlich unter 50 % reduziert werden.

Aufgabe der Erfindung ist es, ein Klebeband für den fliegenden Rollenwechsel zur Verfügung zu stellen, welches die Dicke im Bereich der Verklebung der alten und der neuen Bahn minimiert und trotzdem die volle Höchstzugkraft zur Aufnahme der maximalen Bahnspannung behält.

Die Aufgabe konnte überraschend gelöst werden durch die Erfindung, wie sie im Hauptanspruch dargestellt ist. Die Unteransprüche betreffen vorteilhafte Weiterentwicklungen der Erfindung. Weitere Ansprüche betreffen ein Verfahren für den fliegenden Rollenwechsel unter Verwendung eines derartigen Klebebandes.

So hat es sich überraschend und unerwartet gezeigt, daß die Klebebänder, bei welchen die Rückseite eines spaltbaren Hauptträgers nur teilweise mit einem selbstklebenden System versehen ist, hervorragend für den fliegenden Rollenwechsel geeignet sind, ohne daß beim Splicevorgang das Hauptträgermaterial unkontrolliert ausreißt.

Dementsprechend betrifft der Hauptanspruch ein Klebeband, geeignet für den fliegenden Rollenwechsel von auf Rollen aufgewickeltem Flächbahnmaterial, mit klebender Vorderseite und teilweise klebender Rückseite sowie zwei Längskanten 14, 15, wobei bei dem Klebeband 1 ein Hauptträger 2 vorgesehen ist, der einseitig an der Vorderseite mit einer Selbstklebemasse 3 beschichtet ist (_{"}vorderseitige Selbstklebeschicht"), wobei ein Teil der Rückseite des Hauptträgers (_{"}bedeckte Rückseite") mit zumindest einem selbstklebenden System 6 (_{"}rückseitiges selbstklebendes System") ausgerüstet ist, wobei der Hauptträger 2 zumindest im Bereich des selbstklebenden Systems 6 (im Bereich der bedeckten Rückseite) aus spaltbarem Material besteht, so daß bei der Trennung einer durch dieses Klebeband 1 vermittelten Verklebung zweier Fügeteile, insbesondere zweier Papierbahnen, der Hauptträger 2 des Klebebandes 1 im wesentlichen lediglich im Bereich des oder der rückseitigen selbstklebenden Systeme 6 spaltet.

Sehr vorteilhaft beträgt der mit einem oder mehreren selbstklebenden Systemen 6 ausgerüstete Teil der Rückseite bis zu 50 % der gesamten Rückseitenfläche, bevorzugt zwischen 6 und 48 %, im besonderen 18 bis 24 %, wobei der bedeckte Teil der Rückseite auch in mehrere Flächen aufgeteilt sein kann, welche jeweils mit einem selbstklebenden System 6 ausgerüstet sind.

In einer bevorzugten Ausführungsform wird das rückwärtige selbstklebende System 6 derart gewählt, daß es keinen eigenen Träger besitzt, sondern daß es sich hierbei um ein trägerloses selbstklebendes System handelt. Vorteilhaft wird hierzu dem Hauptträger 2 ein Streifen eines trägerlosen Selbstklebebandes unterklebt, die Selbstklebemasse kann aber beispielsweise auch auflaminiert oder über eine Düse aufgetragen werden.

In einer weiteren vorteilhaften Ausführungsform besitzt auch zumindest eines der rückseitigen selbstklebenden Systeme 6 einen Träger (Sekundärträger). Beispielsweise kann es sich bei dem rückseitigen selbstklebenden System dann um ein doppelseitiges Selbstklebeband handeln.
Der oder die Sekundärträger sind vorteilhaft dermaßen zu wählen, daß deren Spaltfestigkeit bei erfindungsgemäßer Anwendung des erfindungsgemäßen Klebebandes dadurch bewirkt, daß der oder die Sekundärträger nichtspaltend sind oder aber eine größere Spaltfestigkeit aufweisen als der Hauptträger 2 im spaltenden Bereich, so daß bevorzugt der Hauptträger 2 spaltet.

Die Ausmaße des erfindungsgemäßen Klebestreifens können je nach Anwendungsgebiet und -bestimmung unterschiedlich gewählt werden und so den jeweiligen Erfordernissen angepaßt sein. Vorteilhafte Produktdimensionen sind beispielsweise Streifen von 75 mm Breite, von 50 mm Breite and von 38 mm Breite, ohne sich durch diese Angaben beschränken zu wollen.
Das erfindungsgemäße Klebeband kann mit Perforationen oder Einschnitten derart versehen sein, daß sich Teilstücke bestimmter vorgegebener Länge ablängen lassen.

In einer bevorzugten Ausführungsform ist das rückseitige selbstklebende System 6, bei mehreren rückseitigen selbstklebenden Systemen 6 das erste (das am nächsten an der Längsseite 14 liegende), im Bereich der Vorderkante (Längskante 14) des Klebebandes eingerückt, so daß der Hauptträger 2 das rückseitige selbstklebende System 6 auf Seiten der Vorderkante 14 um die Länge Eₛ überragt, wobei vorteilhaft die Einrückung Eₛ bis zu 15 mm, insbesondere 0,5 bis 15 mm, bevorzugt 1 bis 7 mm, sehr bevorzugt 1,5 bis 3,5 mm beträgt. Eine spezielle Ausführungsform des erfindungsgemäßen Klebebandes weist eine Einrückung von Eₛ = 3 mm auf.

In vorteilhafter Anpassung an die jeweilige Anwendung kann bevorzugt ebenfalls eine Variante des erfindungsgemäßen Klebebandes eingesetzt werden, bei der das (erste) rückseitige selbstklebende System 6 direkt an der Vorderseite 14 des Hauptträgers 2 liegt, also nicht eingerückt ist.

Weiterhin kann es für bestimmte Anwendungen von Vorteil sein, wenn mehrere selbstklebende Systeme 6 auf der Rückseite des Hauptträgers 2 vorgesehen sein, etwa derart, daß das Klebeband mit mehreren Selbstklebestreifen ausgerüstet ist.

Insbesondere vorteilhaft sind Klebebänder mit einem oder mit zwei rückseitigen selbstklebenden Systemen 6. Die rückseitigen selbstklebenden Systeme 6 weisen vorteilhaft eine Breite von 3 bis 18 mm, besonders eine Breite von 3 bis 9 mm, ganz besonders 9 mm auf.

In einer bevorzugten Ausführungsform kann der Hauptträger 2 auf der Rückseite am zumindest einer Stelle einen Schlitz 7a oder eine Perforation aufweisen, wobei insbesondere die Schlitz- oder Perforationstiefe T kleiner als die Hauptträgerdicke ist (zusammenfassend in Folge als Anschlitzung bezeichnet). Die Anschlitzung ist bevorzugt hinter (Anschlitzung 7a) und gegebenenfalls zusätzlich vor (Anschlitzung 7b) dem oder den rückseitigen selbstklebenden Systemen 6 vorgesehen (gesehen von der Längskante 14 aus). Sie kann sich direkt "vor" und/oder hinter dem oder den rückseitigen selbstklebenden Systemen 6, aber auch in einiger Entfernung, vorteilhaft bis zu 3 mm, befinden. Bei mehreren rückseitigen selbstklebenden Systemen 6 können die Anschlitzungen vor und/oder hinter jedem einzelnen rückseitigen selbstklebenden System (beispielsweise bei hohen Abständen zwischen den rückseitigen selbstklebenden Systemen), vor/und oder hinter einigen der rückseitigen selbstklebenden Systeme, sehr vorteilhaft aber vor dem ersten und/oder hinter dem letzten der rückseitigen selbstklebenden Systeme vorgesehen sein. Jede Anschlitzung kann vorteilhaft bis zu 50% der Hauptträgerdicke betragen und unterstützt die Funktionsweise des erfindungsgemäßen Klebebandes bei der Verwendung in der Weise, daß der Hauptträger nur in dem gewünschten Bereich (Bereich der Streifen nahe der Anschlitzung bzw. zwischen den Anschlitzungen) spaltet (Anschlitzung hinter dem rückwärtigen selbstklebenden System stoppt den Weiterriß).

In einer vorteilhaften Ausführungsform des erfindungsgemäßen Klebebandes besteht der Hauptträger 2 vollständig aus spaltbarem Material. In einer weiteren günstigen Ausführungsform des erfindungsgemäßen Klebebandes besteht der Hauptträger 2 nur in einem ausgewählten Bereich aus spaltfähigem Material und weist in den übrigen Bereichen keine oder nur geringe Spaltfähigkeit auf. Dies kann beispielsweise derart verwirklicht werden, daß die Bereiche ohne oder mit geringer Spaltfähigkeit dadurch erzeugt werden, indem vor der Beschichtung eines an sich spaltbaren Hauptträgers mit Selbstklebemasse die Bereiche, welche bei der Anwendung nicht spalten sollen, etwa durch Tränkung mit geeigneten Chemikalien stabilisiert werden.

Der Hauptträger 2 besteht bevorzugt aus Papier. Hierfür kommen beispielsweise insbesondere leicht spaltbare Papiersysteme oder Duplexpapiere in Frage.

Bevorzugt wird der spaltfähige Hauptträger 2 derart gewählt, daß die Spaltung im wesentlichen symmetrisch stattfindet, also mittig in der Hauptträgerebene. Im wesentlichen symmetrisch bedeutet in diesem Zusammenhang, daß gewährleistet wird, daß beim Spalten der im Spaltbereich verbleibende Hauptträgerrest 2a nicht zu dünn ist (die Dicke des Hauptträgerrestes 2a sollte vorteilhaft mindestens 20 µm betragen).

Sehr bevorzugt wird als Hauptträger 2 ein im wesentlichen symmetrisch spaltendes Papier eingesetzt, welches eine Spaltbarkeit (Meßmethode tesa JOPM0051) von 10 bis 50 cN/cm, besonders 20 bis 40 cN/cm, ganz besonders 20 bis 30 cN/cm aufweist.

Die Messung der Spaltfestigkeit des Papiers erfolgt dabei wie folgt (tesa JOPM0051): Prüfmuster: DIN A 4 Blätter. Die Muster müssen mind. 16 h im Normklima konditionieren. In der vorgegeben Prüfrichtung (sofern nicht anders angegeben quer) werden zwei Klebebandstreifen von beiden Seiten gegenüberliegend auf das zu prüfende Papier aufgelegt und leicht mit dem Finger angestrichen, um Lufteinschlüsse zu vermeiden. Die Verklebung ist so herzustellen, daß auf einer Seite die Enden des Klebebandes über den Prüfkörper herausragen und unter Falten auf sich selbst zu einem Anfasser verklebt werden können.
Danach wird mit dem Handroller je Seite 2 mal zügig über den Verbund gerollt, um eine einwandfreie Verklebungsfestigkeit zu erreichen. Mit dem Stahllineal werden mittig des Verbundes 15 mm breite Streifen in einer Länge von ca. 20 cm herausgeschnitten. Sodann werden die beiden Anfasser des überragenden Klebebandes per Hand auseinandergezogen, bis ein Spalten des Papierprüflings erkennbar ist. Dann wird der Prüfkörper an den Anfassern frei hängend oben und unten in die Zugprüfmaschine eingespannt und der Rest des Streifens unter konstanter Geschwindigkeit bei 300mm/min auseinandergezogen. Es ist bei sehr dünnen Papieren darauf zu achten, daß das Ergebnis nicht dadurch verfälscht wird, daß die gegenüberliegenden Kanten des Klebebandes am Rand des Prüfkörpers Kontakt haben und verkleben.
Die Spaltfestigkeit wird in cN/cm, auf ganze Zahlen gerundet, mit der Prüfrichtung angegeben (Beispiel: Spaltfestigkeit, quer: 34 cN/cm).

Das erfindungsgemäße Klebeband weist wie vorstehend bereits dargelegt mindestens zwei selbstklebende Schichten auf, nämlich eine Selbstklebemassenschicht 3 auf der Vorderseite des Hauptträgers 2 (_{"}vorderseitige Selbstklebeschicht") sowie ein selbstklebendes System 6 auf der Rückseite des Hauptträgers 2 (_{"}rückseitiges selbstklebendes System").

Die für die vorderseitige Selbstklebeschicht 3 verwendete Klebemasse wird bevorzugt mit einem hohen Tack (Anfaßklebrigkeit) gewählt, während für das rückseitige System 6 vorteilhaft eine scherfeste (Selbst-)Klebemasse eingesetzt wird.

In einer sehr bevorzugten Ausführungsform der Erfindung werden als Selbstklebemassen Acrylathaftklebemassen eingesetzt. Es können vorteilhaft sowohl wasserlösliche als auch wasserunlösliche Acrylate eingesetzt werden. Weiterhin lassen sich auch Natur- und Synthesekautschukmassen als auch Dispersionen der vorstehend beschriebenen Verbindungen einsetzen. Es sei darauf verwiesen, daß prinzipiell alle Basistypen von Haftklebemassen, welche für derartige Verklebungen geeignet sind, eingesetzt werden können.

Vorderseitig sind hochscherfeste Klebemassen für die Anwendung am Kalander oder bei Einsatz am Trockner interessant. Für die Anwendung in der Papierindustrie oder beim normalen Tageszeitungsdruck werden vorderseitig vorteilhaft hochtackige Klebmassen eingesetzt.

Die Messung der Scherfestigkeit erfolgt vorteilhaft folgendermaßen (tesa JOPM002):

Zur Messung der Scherfestigkeit von Klebmassen werden diese auf einen Standardträger (Polyesterfolie; Dicke: 25 µm) beschichtet. Vorteilhaft wird ein immer gleicher Masseauftrag von 25 g/m² gewählt.
Nach dem Trocknen und einer eventuellen Vernetzung der Klebmasse wird ein Streifen von 13 mm Breite und mindestens 20 mm Länge herausgeschnitten und auf ein definiertes Papier (z. B. Tiefdruckpapier, z. B. Neopress T 54, 54 g/m², oder Streichrohpapier, z. B. Mediaprint, 135 g/m²) verklebt. Die Verklebungsfläche beträgt 13 mm x 20 mm. Um einen konstanten Andruck beim Verkleben zu gewährleisten, wird der Prüfling mit einer Rolle (Gewicht: 2 kg) zweimal langsam überrollt. Das so hergestellte Prüfmuster wird mit einem Gewicht von 1 kg parallel zur Verklebungsebene belastet und die Zeit gemessen, die der Klebestreifen auf dem Papier verbleibt.

Für eine bessere Differenzierung der einzelnen Klebmassen wird der Test entsprechend bei weiteren Prüftemperaturen (z.B. 40 °C und 70 °C) durchgeführt. Um eine fehlerfreie Funktion zu gewährleisten, muß die Klebmasse ein Gewicht von 1 kg mehr als 1000 Minuten auf Streichrohpapier und mehr als 2000 Minuten auf Tiefdruckpapier bei 23 °C und 55 % rel. Luftfeuchte halten.

Als scherfeste Selbstklebemassen, insbesondere im Sinne der Selbstklebemasse 6 (rückseitiges selbstklebendes System), können beispielsweise Acrylatselbstklebemassen der folgenden Zusammensetzung eingesetzt werden: 40 bis 90 Gew.-% Acrylsäure, 60 bis 10 % Butylacrylat, oder
40 bis 90 Gew.-% Acrylsäure, 30 bis 5 Gew.-% Butylacrylat, 30 bis 5 Gew.-% Ethylhexylacrylat
Weichmacherzusatz: ethoxylierte Alkylamine, vorzugsweise C16 bis C18, weiter vorzugsweise mit 15 bis 25 Ethoxy-Einheiten.
Die Abmischung Weichmacher mit Polymer beträgt zwischen 55 bis 75 Gew.-% Weichmacher und 25 bis 45 Gew.-% Polymer.
Die Polymerisation erfolgt radikalisch in polaren Lösungsmitteln mit Ethanol als Regler. Es erfolgt eine Teilvernetzung beim Trocknen der Haftklebefilme der mehrwertigen Kationen mittels Zusatz von Aluminiumchelat oder Titanchelat (0,3 bis 1,2 Gew.-%, bezogen auf die Gesamtmenge).

Als hochtackige Selbstklebemassen, insbesondere im Sinne der Selbstklebemasse 3, können beispielsweise Acrylatklebemassen der folgenden Zusammensetzung eingesetzt werden:
30 bis 70 Gew.-% Acrylsäure, 15 bis 35 Gew.-% Butylacrylat, 15 bis 35 Gew.-% Ethylhexylacrylat
Weichmacherzusatz: ethoxylierte Alkylamine, vorzugsweise C16 bis C18, weiter vorzugsweise mit 15 bis 25 Ethoxy-Einheiten.
Die Abmischung Weichmacher mit Polymer beträgt zwischen 55 bis 75 Gew.-% Weichmacher und 25 bis 45 Gew.-% Polymer.
Die Polymerisation erfolgt radikalisch in polaren Lösungsmitteln mit Ethanol als Regler. Es erfolgt eine Teilvernetzung beim Trocknen der Haftklebefilme der mehrwertigen Kationen mittels Zusatz von Aluminiumchelat oder Titanchelat (0,1 bis 0,5 Gew.-%, bezogen auf die Gesamtmenge).

Als weitere Beispiele für vorteilhaft einsetzbare Selbstklebemassen seien repulpierbare Haftkleber auf Basis eines Pfropfpolymeren, in welchem 3 bis 20 Gew-% Vinylverbindungen mit sulfonsauren Salzgruppen auf ein Mischpolymer von (Meth)acrylestern und (Meth)acrylsäure aufgepfropft sind und das mit wasserlöslichen Weichmachern fhaftklebrig eingestellt ist, genannt. In diesem Zusammenhang sei explizit der gesamte Offenbarungsgehalt der DE 43 40 297 A1 sowie der US 5,489,642 einbezogen.
Weiterhin seien als vorteilhaft verwendbar eine wasserlösliche, druckempfindliche Selbstklebemasse genannt, bestehend aus einem Gemisch, das bezogen auf 100 Gewichtsteile Feststoffe
a) 30 bis 80 Gew.-Teile eines Copolymerisats aus 70 bis 88 Gew.-% Acrylsäurebutylester und 12 bis 30 Gew.-% einer Vinylcarbonsäure, dessen Acrylsäurebutylester-Anteil, bezogen auf das Gesamtgewicht der Monomeren, zu 3 bis 12 Gew.-% durch Acrylsäure-2-ethylhexylester und/oder zu 5 bis 25 Gew.-% durch eine Mischung von Vinylöacetat und einem Fumarsäure-dialkylester ersetzt sein kann, und
b) 20 bis 70 Gew.-Teile eines ethoxylierten (Alkyl)phenols, eines ethoxylierten Alkylmono- oder -diamins oder einer ethoxylierten Alkylammonium-Verbindung als Weichmacher enthält, wobei der Säureanteil des Copolymerisats praktisch vollständig mit Kaliumhydroxid (Kalilauge), vorzugsweise unter Verwendung eines Überschusses dieser Base, neutralisiert ist.
   Entsprechend sei hier der gesamte technische Offenbarungsgehalt der DE 31 05 894 A1 einbezogen.

In einer weiteren bevorzugten Ausführungsform ist die vorderseitige Selbstklebeschicht 3 mit einer Abdeckung 4 versehen, die gegebenenfalls mit einer Perforation oder einem Schlitz 5 in Längsrichtung versehen ist. Als Abdeckmaterial kann beispielsweise silikonisiertes Trennpapier verwendet werden. Der Schlitz 5 kann bevorzugt in einem Abstand A von 10 bis 40 mm von der Längskante 15 des Klebebands vorgesehen sein, welche der vorderen Längskante 14 gegenüber liegt, in deren Nähe das selbstklebende System 6 angeordnet ist. Um die volle Zugfestigkeit des Papierträgers 2 und der damit maximal zu übertragenen Bahnspannungen zu gewährleisten, beträgt der Abstand M zwischen der Schlitzung 5 des Trennpapiers und der Anschlitzung 7a des Hauptträgers vorteilhaft mindestens 5 mm.

In einer vorteilhaften Ausführungsform ist das Klebeband mit zumindest einer mittels eines Detektors maschinell (berührungslos) erkennbaren Vorrichtung ausgestattet, wobei die Erkennung bevorzugt durch Metall, Transpondersysteme oder durch optische Vorrichtungen erzielt wird.
In einer bevorzugten Variante besteht der Hauptträger oder Bereiche hiervon aus einem Material, welchem zumindest ein detektierbarer Zusatz zugesetzt ist, und/oder der Hauptträger weist zumindest eine Schicht aus einem detektierbaren Material auf. In einer Ausführungsform des erfinderischen Klebebandes werden dem eigentlichen Hauptträgermaterial beispielsweise Metallpulver- oder Granulate beigemischt, oder das Hauptträgergrundgerüst wird mit einer oder mehreren Metallschichten versehen. In einer weiteren Variante des erfinderischen Klebebandes wird die integrierte Signalfunktion in der Art realisiert, daß der Hauptträger auf der Ober- und/oder äüf der Unterseite mit einer Aluminiumschicht versehen ist, und zwar vorteilhaft vollflächig. Statt Aluminium lassen sich als Schicht auch alle weiteren entsprechend der Anforderungen detektierbaren Materialien verwenden, insbesondere Metalle, beispielsweise Kupfer, Silber, Gold. Derartige Schichten befinden sich vorteilhaft auf der Vorderseite des Klebebandes beziehungsweise des Hauptträgers.
In einer nächsten Ausführungsform der Erfindung wird die Detektion durch Transpondersysteme hervorgerufen, insbesondere durch Dünnschichttranspondern, welche in das Klebeband integriert werden. Hier sind Ausführungen mit aktiven und passiven Transpondern realisierbar.
Eine weitere Ausführungsform des erfinderischen Klebebandes zeichnet sich dadurch aus, daß das Klebeband mit optisch registrierbaren Einrichtungen versehen ist. Dies können beispielsweise Strichcodes sein, welche mit einem Laser gelesen werden können. Bei der Verwendung von Strichcodes lassen sich neben der eigentlichen Detektionswirkung zusätzlich Informationen übermitteln, beispielsweise Angaben über Art oder Bahnstärke der neuen Rolle. So kann bei Einsatz von Rollen unterschiedlicher Art oder Beschaffenheit die Verarbeitungsanlage automatisch auf die neuen Verarbeitungsbedingungen eingeregelt werden, ohne daß es einer weiteren äußeren Steuerung bedarf.
In ähnlicher Weise funktionieren optische Reflektoren oder Beugungsgitter, welche im oder am Hauptträger des Klebebandes angebracht sind. Diese können ebenfalls optisch detektiert werden und den Splicevorgang auslösen.

Ein weiteres Beispiel für optisch detektierbare Vorrichtungen sind bestimmte Farbgebungen des Hauptträgers, welche durch geeignete Detektiersysteme ebenfalls registriert werden können.

Weiterhin betrifft die Erfindung ein Spliceverfahren für den fliegenden Rollenwechsel von auf Rollen aufgewickelten Flachbahnmaterial, bei welchem die oberste Papierbahn 11 einer neuen Rolle mit einem Klebeband 1, welches mit einem Hauptträger 2; der einseitig an der Vorderseite mit einer Selbstklebemasse 3 beschichtet ist, und bei welchem ein Teil der Rückseite mit zumindest einem selbstklebenden System 6 ausgerüstet ist, an der darunterliegenden Bahn 12 fixiert wird und ein zum Spliceverfahren benötigter Teil der vorderseitigen Selbstklebeschicht 3 offenliegt, woraufhin die so ausgerüstete neue Rolle neben eine fast gänzlich abgespulte zu ersetzende alte Rolle plaziert wird und auf die im wesentlichen gleiche Drehgeschwindigkeit wie diese beschleunigt wird, dann gegen die alte Bahn 13 gedrückt wird, wobei der offenliegende Bereich der vorderseitigen Selbstklebeschicht 3 des Klebebandes 1 mit der alten Bahn 13 bei im wesentlichen gleichen Geschwindigkeiten der Bahnen verklebt, während zugleich der Hauptträger 2 aus spaltfähigem Material im wesentlichen in dem Bereich, in dem er mit dem rückwärtigen selbstklebenden System 6 ausgerüstet ist, derart spaltet, daß nach dem Spaltvorgang keine klebenden Bereiche offenliegen.

In einer Weiterentwicklung des erfinderischen Verfahrens wird das Klebeband 1 rechtwinklig zur laufenden Papierbahn verklebt. In einer vorteilhaften Variante des erfinderischen Verfahrens kann die Verklebung des Klebebandes auch in einem spitzen Winkel von bis zu 30° zur laufenden Papierbahn, insbesondere von bis zu 10°, erfolgen.

Bei dem Spliceverfahren wird ein Klebeband 1 in einer geraden Linie unter die oberste Bahn 11 auf eine neue Papierrolle verklebt. Dabei erfolgt die Verklebung so, daß ein Teil des Klebebandes 1 für die Verklebung mit der ablaufenden Bahn 13 frei liegen bleibt. Bevorzugt wird das Klebeband 1 in gerader Linie unter die oberste Papierbahn 11 der neuen Rolle verklebt, so daß ein Teil des Klebebandes 1 frei bleibt, während das rückseitige selbstklebende System 6 des Klebebandes 1 mit der darunter liegenden Bahn 12 verklebt und damit die oberste Bahn 11 sichert, wobei gegebenenfalls zunächst nur ein Teil 4a der gegebenenfalls auf der vorderseitigen Selbstklebeschicht 3 befindlichen Abdeckung 4 abgezogen wurde, so daß der zum Spliceverfahren benötigte Teil der Selbstklebeschicht 3 noch mit der Abdeckung 4b abgedeckt ist und die Rolle in diesem Zustand keine freie klebende Fläche aufweist, worauf zur abschließenden Vorbereitung des Spliceverfahrens die gegebenenfalls noch vorhandene restliche Abdeckung 4b entfernt wird, worauf die so ausgerüstete neue Rolle neben eine fast gänzlich abgespulte, zu ersetzende alte Rolle plaziert wird und auf die gleiche Drehgeschwindigkeit wie diese beschleunigt wird, dann gegen die alte Bahn 13 gedrückt wird, wobei der offenliegende Bereich der vorderseitigen Selbstklebeschicht 3 des Klebebandes 1 mit der alten Bahn 13 bei im wesentlichen gleichen Geschwindigkeiten der Bahnen verklebt, während zugleich der Hauptträger 2 im wesentlichen in dem Bereich, in dem er mit dem rückwärtigen selbstklebenden System 6 ausgerüstet ist, spaltet und das rückwärtige selbstklebende System 6 mit dem auf diesem verbleibenden Rest 2a des Hauptträgers 2 nichtklebend abdeckt.
Nach dem Kontakt des Klebebandes 1 mit der ablaufenden Bahn 13 kommt es also zum Spalten des Hauptträgers 2 des Klebebandes in dem mit dem rückseitigen selbstklebenden System 6 versehenen Bereich, so daß die oberste Papierlage 11 des neuen Ballens freigegeben wird und kein klebrigen Rückstände mehr offen vorliegen.

Im folgenden soll die Erfindung anhand eines Ausführungsbeispiels näher beschrieben werden, ohne sie aber damit unnötig einschränken zu wollen.

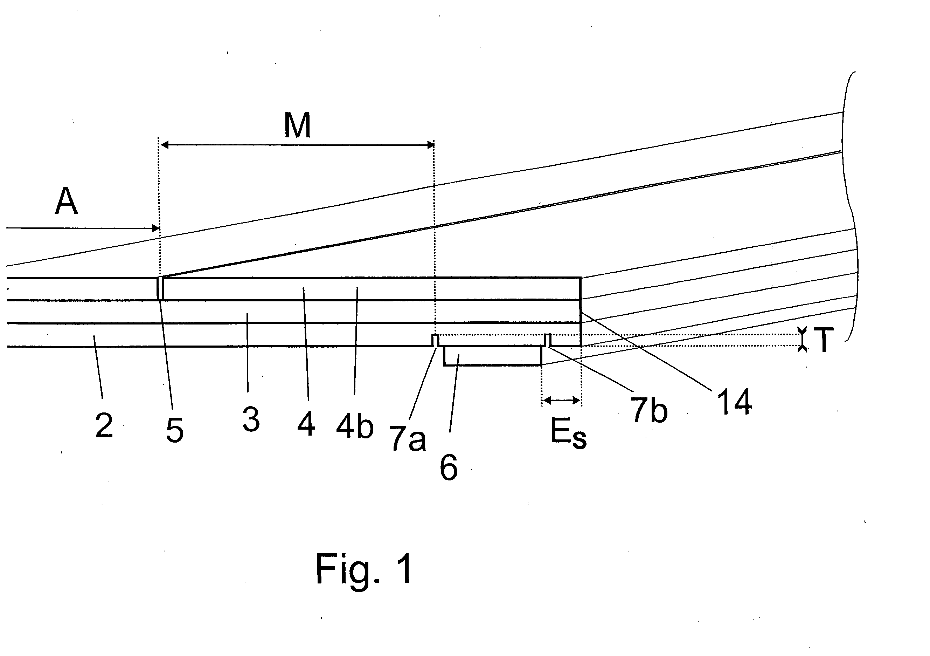

Es zeigen:
- Fig. 1: eine seitliche, schematische Ansicht eines erfindungsgemäßen Klebebandes
- Fig. 2: eine seitliche, schematische Ansicht eines Klebebandes gemäß Fig. 1, aufgeklebt auf eine Papierrolle und fertig für den fliegenden Rollenwechsel
- Fig. 3: eine Ansicht gemäß Fig. 2, aber nach erfolgtem fliegenden Rollenwechsel
- Fig. 4: a) eine seitliche, schematische Ansicht eines erfindungsgemäßen Klebebandes mit zwei rückseitigen selbstklebenden Systemen
b) eine Ansicht des Klebebandes aus Fig. 4a) entsprechend Fig. 2
- Fig. 5: a) ein erfindungsgemäßes Klebeband
b) und ein Klebeband gemäß des Standes der Technik
   im Vergleich der Schichtdicken
Ein Ausführungsbeispiel für ein erfindungsgemäßes Klebeband ist in Figur 1 dargestellt. Gezeigt wird ein Klebeband 1 mit einem Hauptträger 2 aus nicht naßfestem, einseitigem Etikettenpapier (Flächengewicht 70 g/m², Dicke 55 µm). Der Hauptträger 2 ist einseitig beschichtet mit einer hochtackigen Klebemasse 3 (vorderseitige Selbstklebeschicht) mit einem Auftrag von 55 g/m². Die Gesamtdicke des Hauptträgers 2 mit Selbstklebemasse 3 beträt etwa 110 µm, die Breite 50 mm. Die Selbstklebemasse 3 ist abgedeckt mit einem silikonisierten Trennpapier 4. Dieses ist in 17 mm Abstand vom linken Rand mit einem Schlitz 5 versehen, so daß zunächst der linke Teil 4a des Trennpapiers 4 abgenommen werden kann, dann der rechte Teil 4b.
Am rechten Ende ist das Klebeband 1 mit einem Streifen einer scherfesten Selbstklebemasse 6 (rückseitiges selbstklebendes System) mit einem Auftrag von 40 g/m² ausgerüstet; der Streifen der scherfesten Selbstklebemasse 6 hat eine Breite Von 9 mm. Der Abstand Eₛ des Streifens der scherfesten Selbstklebemasse 6 zur Vorderkante 14 des Klebebandes 1 beträgt 3 mm.
Der Hauptträger des Klebebandes 1 ist mit einer Anschlitzung 7a hinter dem rückseitigen selbstklebenden System 6 und optional mit einer Anschlitzung 7b vor dem rückseitigen selbstklebenden System 6 versehen.

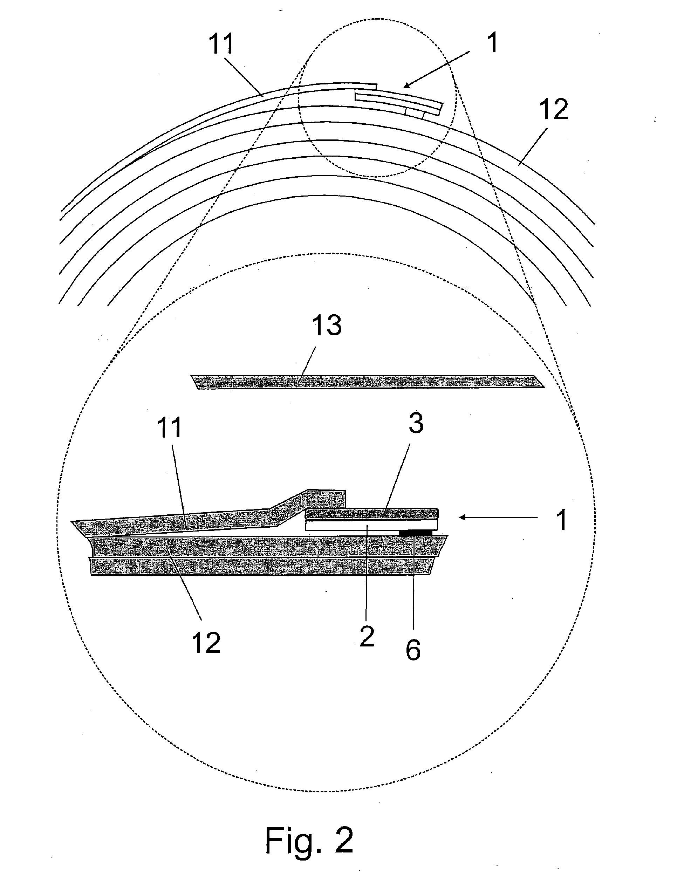

In Fig. 2 ist dargestellt, wie ein solches Klebeband 1 unter eine Papierbahn 11 einer neuen Papierrolle geklebt ist, und zwar mit dem linken Teil, nachdem von diesem der Teil 4a des Trennpapiers 4 abgezogen wurde. Vorher wurde das Klebeband mit dem rückseitigen selbstklebenden System 6 auf die unter der Papierbahn 11 liegende Papierbahn 12 der Papierrolle verklebt. Auch der rechte Teil 4b des Trennpapiers 4 wurde abgezogen, so daß die so ausgerüstete Papierrolle fertig für einen fliegenden Rollenwechsel ist, wobei die Verklebung des Klebebandes 1 im rechten Winkel über die Rolle läuft.
Ein Teil der vorderseitigen Selbstklebeschicht 3 liegt nun offen und stellt für den fliegenden Wechsel die Kontaktfläche zu ablaufenden Bahnen dar. Die Kontaktfläche hat eine Breite von 33 mm und erstreckt sich über die gesamte Breite der Papierrolle.

Die so ausgerüstete (neue) Papierrolle wird neben die abgewickelte (alte) Papierrolle gebracht, an die die neue angesetzt werden soll. Die neue Papierrolle wird auf eine Drehgeschwindigkeit beschleunigt, die der Geschwindigkeit der ablaufenden Bahn nahezu entspricht. Sind beide Geschwindigkeiten ausreichend synchronisiert, kann der Wechsel vollzogen werden.

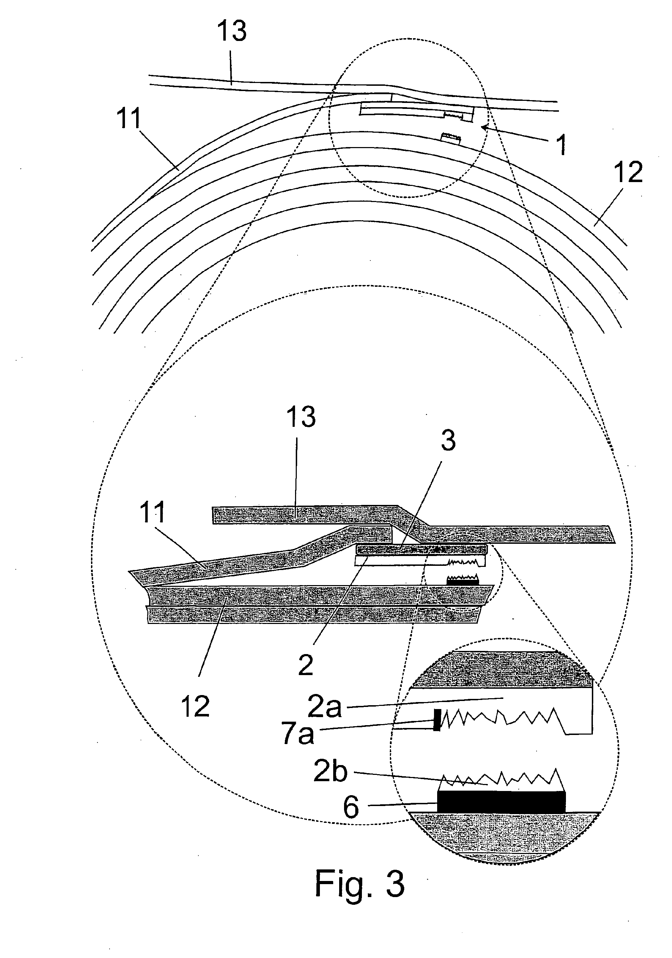

Die ablaufende Bahn 13 wird mittels Andruckwelle (nicht dargestellt) mit dem Umfang der neuen Rolle in Kontakt gebracht und der offenliegende Bereich der vorderseitigen Selbstklebeschicht des Klebebandes gemäß Fig. 3 mit der ablaufenden Papierbahn 13 verklebt. Augenblicklich nach dem Klebekontakt spaltet der Hauptträger aus spaltfähigem Material im wesentlichen in dem Bereich, in dem er mit dem rückwärtigen selbstklebenden System 6 ausgerüstet ist. Vom Hauptträger 2 verbleibt ein Teil 2a auf der vorderseitigen Selbstklebeschicht 3, während das rückwärtige selbstklebende System 6 mit dem darauf verbleibenden Rest 2b des Hauptträgers 2 nichtklebend abgedeckt ist. Damit sind beide Selbstklebemassen (3 und 6) gewissermaßen neutralisiert, kleben nicht mehr und stören damit auch nicht im weiteren Prozeß in den Papierverarbeitungsmaschinen.

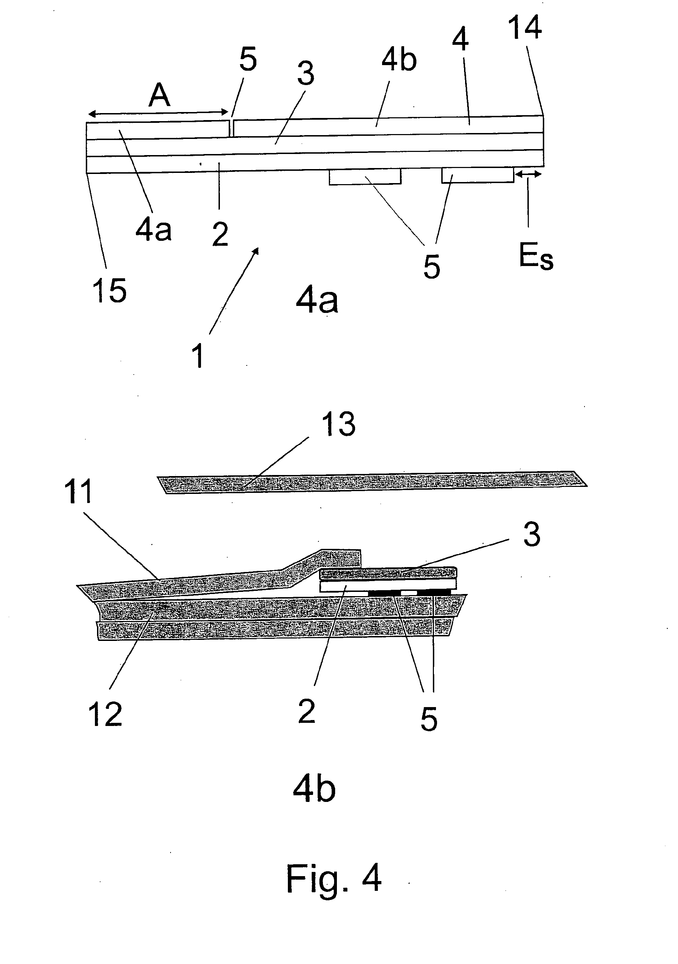

Fig. 4 zeigt beispielhaft eine Ausführungsform des erfindungsgemäßen Klebebandes mit zwei rückseitigen selbstklebenden Systemen 6. Auch bei Verwendung dieser Ausführungsform findet das Spalten des Papiers im wesentlichen nur jeweils in den Bereichen statt, in denen der Hauptträger mit de rückwärtigen selbstklebenden Systemen 6 ausgerüstet ist.

Wider Erwarten ist das erfindungsgemäße Klebeband für den fliegenden Rollenwechsel hervorragend geeignet. So findet bei geeigneter Gestaltung des Klebebandes 1 der Spaltvorgang des Hauptträgers 2 im wesentlichen nur in dem Bereich statt, in dem der Hauptträger 2 mit dem rückseitigen selbstklebenden System 6 ausgerüstet ist. Sehr vorteilhaft kann mit dem erfindungsgemäßen Klebeband 1 die Dicke der Klebestelle bei dem Übergang von der alten auf die neue Rolle stark vermindert werden. Hierdurch ergeben sich erhebliche technische Vorteile für den reibungslosen Ablauf des Papierverarbeitungsprozesses. Beispielhaft soll hier der Vorteil gegenüber einem Klebeband für den fliegenden Rollenwechsel, welches zum Stand der Technik gehört (vgl. beispielsweise DE 196 28 317 A1, DE 199 02 179 A1), dargestellt werden:

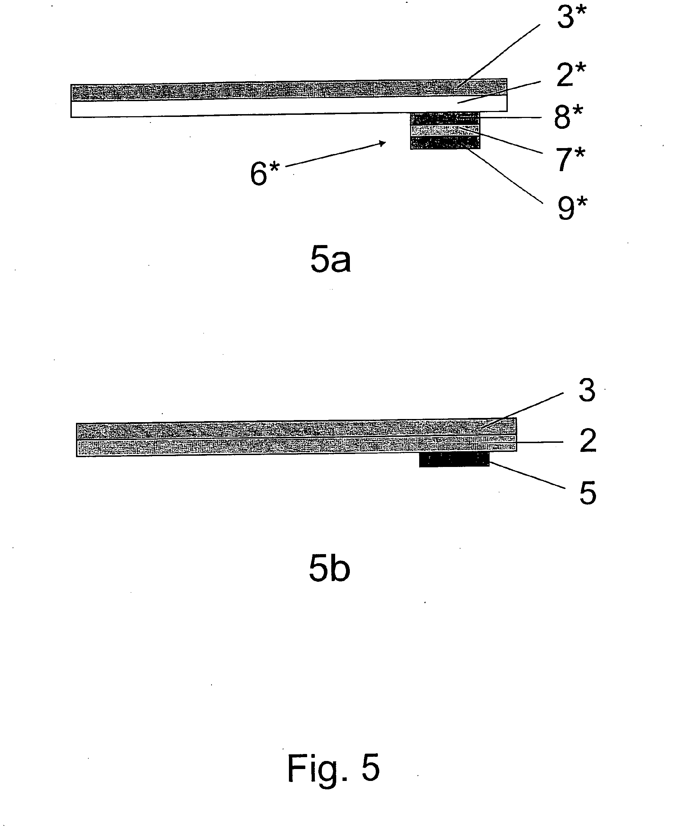

Das Klebeband nach dem Stand der Technik besitzt folgenden Aufbau (vgl. Fig. 5a; Darstellung ohne Abdeckungen):
Einen Hauptträger 2*, versehen mit einer Schicht einer Selbstklebemasse 3* auf der Vorderseite, und versehen mit einem Streifen eines spaltbaren Systems 6* auf der Rückseite des Hauptträgers. Das spaltbare selbstklebende System ist dabei wiederum aufgebaut aus einem Spaltträger 7*, versehen mit einer Schicht einer Selbstklebemasse 8* auf der Spaltträgervorderseite für die Verklebung zum Hauptträger 2*, sowie versehen mit einer Schicht einer Selbstklebemasse 9* auf der Spaltträgerrückseite für die Verklebung mit der neuen Papierrolle.

Die Schichtdicken betragen:

| | |
|---|---|
| Selbstklebeschicht 3* (Masseauftrag 55 g/m²) | 50 µm |
| Hauptträger 2* | 65µm |
| Selbstklebeschicht 8* (Masseauftrag 30 g/m²) | 27,5 µm |
| Spaltträger 7* | 55 µm |
| Selbstklebeschicht 9* (Masseauftrag 40 g/m²) | 37,5 µm |
| | = 235 µm |
| nach dem Splicevorgang bei Annahme symmetrischen Spaltens des Spaltträgers: abzüglich Dicke der Selbstklebeschicht 9* abzüglich halbe Dicke des Spaltträgers 7* | = 170 µm |

Das erfindungsgemäße Klebeband weist hingegen folgende Abmessungen auf (Fig. 5b):

| | |
|---|---|
| Selbstklebemasse 3 (Masseauftrag 55 g/m²) | 50 µm |
| Hauptträger 2 | 55 µm |
| Selbstklebemasse 6 (Masseauftrag 40 g/m²) | 37,5 µm |
| | = 142,5 µm |
| nach dem Splicevorgang bei Annahme symmetrischen Spaltens des Hauptträgers: abzüglich Dicke der Selbstklebeschicht 6 | = 105 µm |

(Die Dicke des Hauptträgers bleibt über den wesentlichen Teil der Verklebungsstelle erhalten).

Mit dem erfindungsgemäßen Klebeband kann die Dicke der Verklebungsstelle von 170 µm mit Klebebändern gemäß dem Stand der Technik auf 105 µm mit dem erfindungsgemäßen Klebeband reduziert werden, ohne hierbei Nachteile bezüglich der Qualität der Verklebung, besonders der Zugfestigkeiten und der damit zu übertragenen maximalen Bahnspannung, oder bezüglich der Funktionalität für den Splicevorgang hinnehmen zu müssen.

## Patentansprüche

1. Klebeband, geeignet für den fliegenden Rollenwechsel von auf Rollen aufgewickeltem Flachbahnmaterial, wobei das Klebeband (1) eine klebende Vorderseite besitzt, wobei es weiterhin eine teilweise klebende Rückseite besitzt, wobei es weiterhin zwei Längskanten (14, 15) besitzt, und wobei weiterhin ein Hauptträger (2) vorgesehen ist, welcher einseitig an der Vorderseite mit einer Selbstklebemasse (3) beschichtet ist,
**dadurch gekennzeichnet, daß** ein Teil der Rückseite des Hauptträgers (2) mit zumindest einem selbstklebenden System (6) ausgerüstet ist, und
der Hauptträger (2) zumindest im Bereich des oder der selbstklebenden Systeme (6) aus spaltbarem Material besteht, so daß
bei Trennung einer durch dieses Klebeband (1) vermittelten Verklebung zweier Fügeteile der Hauptträger (2) des Klebebandes (1) im wesentlichen lediglich im Bereich des oder der rückseitigen selbstklebenden Systeme (6) spaltet.

2. Klebeband nach Anspruch 1, **dadurch gekennzeichnet, daß** der mit dem zumindest einen selbstklebenden System (6) ausgerüstete Teil der Rückseite bis zu 50 % der gesamten Rückseitenfläche beträgt.

3. Klebeband nach Anspruch 2, **dadurch gekennzeichnet, daß** der mit dem zumindest einen selbstklebenden System (6) ausgerüstete Teil der Rückseite zwischen 6 und 48 %, insbesondere zwischen 18 und 25 % der gesamten Rückseitenfläche beträgt.

4. Klebeband nach zumindest einem der vorangehenden Ansprüche, **dadurch gekennzeichnet, daß**
das (erste) selbstklebende System (6) in einem Abstand (A) von 0,5 bis 15 mm, bevorzugt 1 bis 7 mm, sehr bevorzugt 1,5 bis 3,5 mm von der einen Längskante (14) des Klebebandes angeordnet ist.

5. Klebeband nach zumindest einem der vorangehenden Ansprüche, **dadurch gekennzeichnet, daß**
der Hauptträger 2 auf der Rückseite an zumindest einer Stelle eine Perforation oder einen Schlitz (7a) aufweist, wobei insbesondere die Schlitz- oder Perforationstiefe (T) kleiner als die Hauptträgerdicke ist, wobei insbesondere die Schlitz- oder Perforationstiefe (T) nicht mehr als 50 % der Hauptträgerdicke beträgt.

6. Klebeband nach zumindest einem der vorangehenden Ansprüche, **dadurch gekennzeichnet, daß**
der Hauptträger (2) vollständig aus spaltbarem Material besteht.

7. Klebeband nach zumindest einem der vorangehenden Ansprüche, **dadurch. gekennzeichnet, daß**
als Hauptträger (2) ein im wesentlichen symmetrisch spaltendes Papier eingesetzt wird, welches eine Spaltbarkeit (Meßmethode tesa JOPM0051) von 10 bis 50 cN/cm, besonders 20 bis 40 cN/cm, ganz besonders 20 bis 30 cN/cm aufweist.

8. Klebeband nach zumindest einem der vorangehenden Ansprüche, **dadurch gekennzeichnet, daß**
die vorderseitige Selbstklebemasse (3) mit einem Trennmaterial (4) abgedeckt ist.

9. Klebeband nach zumindest einem der vorangehenden Ansprüche, **dadurch gekennzeichnet, daß**
das Trennmaterial (4) mit einem Schlitz (5) oder mit einer Perforation versehen ist.

10. Spliceverfahren für den fliegenden Rollenwechsel von auf Rollen aufgewickelten Flachbahnmaterial, bei welchem die oberste Papierbahn (11) einer neuen Rolle mit einem Klebeband (1), welches mit einem Hauptträger (2), der einseitig an der Vorderseite mit einer Selbstklebemasse (3) beschichtet ist, und bei welchem ein Teil der Rückseite mit zumindest einem selbstklebenden System (6) ausgerüstet ist, an der darunterliegenden Bahn (12) fixiert wird und ein zum Spliceverfahren benötigter Teil der vorderseitigen Selbstklebeschicht (3) offenliegt, woraufhin die so ausgerüstete neue Rolle neben eine fast gänzlich abgespulte zu ersetzende alte Rolle plaziert wird und auf die im wesentlichen gleiche Drehgeschwindigkeit wie diese beschleunigt wird, dann gegen die alte Bahn (13) gedrückt wird, wobei der offenliegende Bereich der vorderseitigen Selbstklebeschicht (3) des Klebebandes (1) mit der alten Bahn bei im wesentlichen gleichen Geschwindigkeiten der Bahnen verklebt, **dadurch gekennzeichnet, daß** zugleich der Hauptträger (2) aus spaltfähigem Material im wesentlichen in dem Bereich, in dem er mit dem rückwärtigen selbstklebenden System (6) ausgerüstet ist, derart spaltet, daß nach dem Spaltvorgang keine klebenden Bereiche offenliegen.

11. Verfahren nach Anspruch 9, **dadurch gekennzeichnet, daß** ein Klebeband gemäß einem der Ansprüche 1 bis 8 eingesetzt wird.
